# EUROPEAN PATENT SPECIFICATION

(11) **EP 2 236 063 B1**
(45) Date of publication and mention of the grant of the patent: **29.05.2013**
(21) Application number: 10170585.3
(22) Date of filing: 19.11.2007
(51) Int. Cl.: A47J 31/44, A47J 31/41, A47J 31/46

(54) **Method for preparing and dispensing a beverage, in particular a chocolate-based beverage in a coffee machine**
Verfahren zur Herstellung und Ausgabe eines Getränks, insbesondere eines Getränks auf Schokoladenbasis, in einer Kaffeemaschine
Procédé pour la préparation et la distribution d'une boisson, en particulier une boisson chocolatée dans une machine à café

(43) Date of publication of application: 06.10.2010
(62) Divisional of application: 07425729.6
(73) Proprietor: Gruppo Cimbali S.p.A., 20082 Binasco (MI) (IT)
(72) Inventor: Sala, Dario, 20082, Binasco (MI) (IT); Coccia, Andrea, 20082, Binasco (MI) (IT)
(74) Representative: Acco, Stefania

(56) References cited:
- WO-A1-2005/063093
- US-A1- 2004 118 291
- US-A1- 2005 287 271

## Description

The present invention relates to an apparatus for preparing and dispensing a beverage obtained from a concentrated fluid product having the taste of the beverage to be prepared, in a machine for preparing various types of coffee and milk based beverages, said machine comprising at least one steam generator for producing steam, an apparatus for producing the coffee with associated dispenser, as well as a milk source.

Coffee machines suitable for preparing and dispensing various types of beverages are known in the specific technological sector,see for instance US 2004/118291.

In machines of the conventional type, the beverages are prepared with a certain amount of manual dexterity by the operator who, for example, heats and froths milk in a jug and then pours it into the cup and mixes it with the coffee in order to form cappuccino.

Modem technology and the massive use of electronics are also giving rise in this type of machine to an increasingly greater automation of the operations such that they may also be performed by operators who are less expert in the techniques for preparing the various beverages.

Apart from coffee, cappuccino and tea, a beverage which is becoming increasingly popular among consumers is hot chocolate which traditionally is prepared by mixing the chocolate-based product with milk and then heating the whole preparation using the conventional steam spout of a coffee machine.

Instead of conventional soluble products in powder form, chocolate-based fluid preparations in concentrated form, which must be diluted with water or milk, are becoming increasingly widespread.

These latter preparations, in fact, have the advantage that they may pass from a sterile container which contains them to the sealed distribution pipes inside the apparatus without any particular risk of contamination which could adversely affect the hygienic conditions of the beverage.

Since, in coffee machines, the use of concentrated fluid milk as a primary source for the various uses in these machines is also becoming increasingly widespread, the problem arises as to how to use this milk source during preparation of the chocolate when the latter is in turn obtained from a concentrated fluid product.

The direct mixing of a quantity of concentrated fluid milk with a corresponding quantity of concentrated chocolate-based product and subsequent mixing with water for final dilution at the optimum density required for the beverage is not easy to achieve and produces results which are not satisfactory from a qualitative point of view.

The object of the present invention is to propose a method for preparing chocolate in a coffee and cappuccino machine, obtained from a chocolate-based concentrated fluid product, using for this function the same devices used for preparation of milk-based beverages, resulting in a significant structural simplification and standardization of the components used.

Another object of the present invention is to provide the possibility of obtaining from a coffee machine, particularly but not exclusively of the type mentioned above, also both hot and cold chocolate-based beverages in order to satisfy the requirements of users as regards variation of the beverages.

This object is achieved by the method according to Claim 1 which follows. The characteristic features and advantages of the present invention will emerge more clearly from the following detailed description of a preferred practical embodiment thereof, illustrated by way of a non-limiting example in the accompanying drawings in which:
- Figure 1 shows in schematic form the circuit layout of the apparatus;

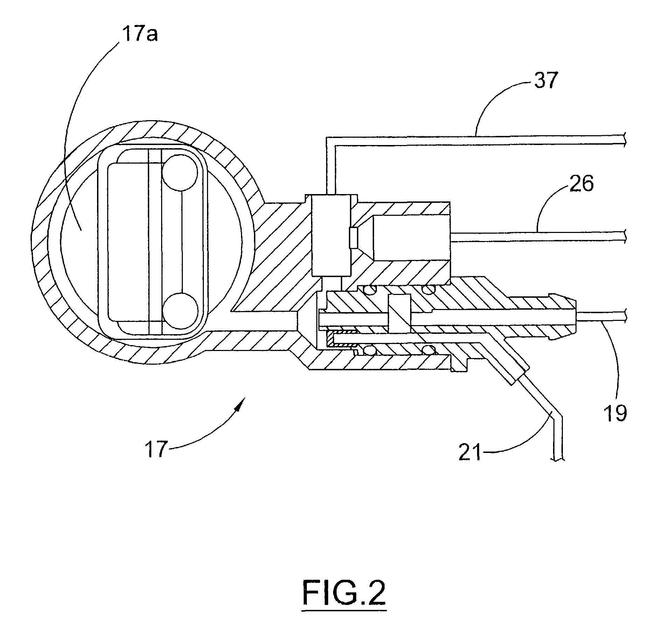

- Figure 2 shows, cross-sectioned and on a larger scale, the device for preparing the beverage with frother and associated lines for supplying the liquid milk, steam, air and chocolate-based product with preliminary dilution thereof.

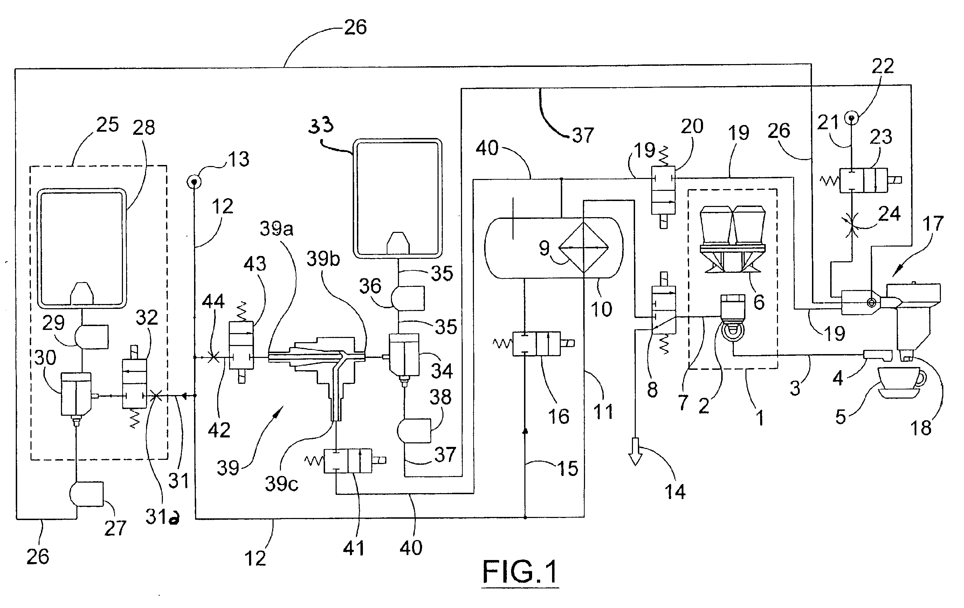

With reference to the abovementioned Figure 1, 1 denotes in its entirety an apparatus for producing coffee, in particular, espresso coffee, without this necessarily excluding a different type of coffee beverage. 2 denotes the coffee extraction device which is connected, by means of a line 3, to a conventional dispenser 4 underneath which a receiving cup, schematically denoted by 5, is situated.

The characteristics of the coffee extraction device 2 depend on the preparation methods: said device may be in the form of a simple mixer in the case of coffee which is soluble or in the form of a concentrated syrup.

Alternatively, it may consist of a conventional device equipped with filter or functioning using pods or capsules.

6 denotes schematically a conventional container for dispensing soluble coffee or concentrated coffee syrup or also represents the device for grinding coffee beans in the case of traditional espresso coffee.

The extraction device 2 is connected by means of the line 7 to an intercept valve 8 which connects it to the hot water source which, in the example shown in Figure 1, consists of a heat exchanger 9 which is situated inside a steam generator 10 and, in the machine, is also intended to produce steam. The heat exchanger 9 is connected, by means of the line 11 and the line 12, to a water source 13 for necessary replenishing with water.

In the position where it intercepts the line 7 the valve 8 connects the extraction device to an outlet, denoted by 14, for removal of any residual matter.

The steam generator 10 is also replenished with water from the source 13 via the line 15 and the intercept valve 16.

The coffee producing apparatus 1 has, associated with it, a beverage preparation device - denoted by 17 - which includes a frothing chamber 17a with associated dispensing spout 18 situated above the cup 5. The beverage preparation device 17 is connected, by means of the line 19 and the intercept valve 20, to the steam generator 10. By means of another line, denoted by 21, the device 17 is connected to an air source, denoted by 22.

An intercept valve 23 and an adjustable flow restrictor 24, if required, are arranged along the line 21.

Finally, the same beverage preparation device 17 is connected to a source 25 of liquid milk by means of a line 26 along which a pump 27 operated by a conventional electric motor, not shown, is arranged. The pump 27 may advantageously be of the peristaltic type or gear type and the electric motor may be of the variable-speed type.

The source 25 of liquid milk consists of a tank 28 containing concentrated milk in the fluid state which is conveyed, by means of a metering pump 29, to a connector unit 30 which may also be designed to contain internally a non-return valve (not shown in the drawings) suitable for preventing bacterial contamination of the product contained in the tank 28.

The water source 13 is connected to the connector unit 30 via a line 31 provided with a flow restrictor 31a and intercepted by the valve 32.

Mixing of a predetermined quantity of concentrated milk and water from the source 13 is performed inside the connector unit 30, resulting in the formation of cold diluted milk.

The latter, by means of the pump 27 and the line 26, is propelled as far as to the beverage preparation device 17 where heating, when required, is performed by means of transfer of the condensation heat of the steam from the steam generator 10 via the line 19 and the intercept valve 20.

Any frothing of the milk, when required, is performed in the frothing chamber 17a by means of the introduction of air via the line 21 and the adjustable flow restrictor 24. The air may also be under pressure.

If a quantity of cold milk is desired or requested by the user, the steam valve 20 is kept closed.

In these conditions the cold milk may be dispensed in its liquid state or may also be frothed, by supplying air to the device 17 by means of the line 21. In accordance with the invention, the coffee machine comprises a tank 33 containing a chocolate-based fluid preparation in concentrated form.

The tank 33 is connected to a connector unit 34 by means of a first line 35 along which a pump 36 is arranged. The same connector unit 34 is connected, by means of a second line 37 comprising where necessary also a supply pump 38, to the beverage preparation device 17.

A quantity of concentrated chocolate product is drawn in by the tank 33 via the pump 36 which propels it into the connector unit 34. The latter may also be provided with a conventional non-return valve for preventing contamination inside the tank 33.

In accordance with the invention, the quantity of product, for example chocolate-based product, supplied into the connector unit 34 undergoes a first stage of dilution with water heated to a predetermined temperature inside a steam heater device denoted overall by 39.

The steam heater 39, which may be of the conventional type, comprises an inlet 39a for the water to be heated, an outlet 39b for the heated water and an inlet 39c for the heating steam.

The inlet 39c is connected to the steam line 40, leading from the steam generator 10, by means of an associated intercept valve 41.

The inlet 39a of the heater is connected, by means of the line 42, to the water source 13 via an intercept valve 43 and a calibrated flow restrictor 44.

The outlet 39b of the heater 39, by means of a line section 42a, is directly connected to the connector unit 34 inside which preliminary dilution of the quantity of chocolate product with a predetermined quantity of hot water is performed.

This is performed after simultaneous opening of the valve 43, which supplies the water, and the valve 41, which supplies the quantity of heating steam.

The quantity of product, for example chocolate product in concentrated form, is then diluted in the connector unit 34 depending on the delivery of the metering pump 36 and the flowrate determined by the calibrated passage of the flow restrictor 44 and conveyed to the beverage preparation device 17 via the line 37, with the aid, if necessary, of the additional supply pump 38.

The quantity of chocolate product, pre-diluted in the connector unit 34 with tepid water, completes its dilution and any heating until the conditions considered optimum for the beverage are obtained, in the beverage preparation device 17 which comprises a frothing chamber 17a.

Final dilution is achieved by means of introduction into the device 17 of a predetermined quantity of milk via the line 26 and a command imparted to the supply pump 27.

Heating is achieved by means of introduction, into the device 17, of a predetermined quantity of steam via the line 19 and a command imparted to the intercept valve 20.

In accordance with the apparatus of the present invention, it is also possible to obtain a chocolate drink also in the frothed condition by imparting a special command to the valve 23 which causes the introduction of a calibrated quantity of air into the device 17 and the consequent frothing of the beverage inside the chamber 17a.

Finally, as can be seen in Figure 1, the dispenser 18 for the various beverages which may be prepared in the device 17, including the chocolate-based beverage, is arranged preferably close to the coffee dispenser 4 so that, with a single position of the cup 5, it is possible to receive in the cup the various types of beverages which the machine is able to dispense.

From the above description it can be understood that, depending on the opening state of the intercept valves 8, 20, 23 and 43 as well as operation of the pump 27 and the pumps 36 and/or 38, it is possible to dispense various types of beverages, in both the hot and cold state, including, therefore, in addition to the usual coffee, cappuccino and milk, other beverages such as, for example, chocolate, all in the same machine and using procedures which can be performed automatically with the maximum flexibility as regards the type of beverage to be dispensed and at the same time ensuring a high degree of operational reliability.

Although in the above description particular reference has been made to the preparation of a beverage obtained from a chocolate-based fluid product in concentrated form, it is clear that, by way of alternative, the beverage may be obtained from any type of fluid product in concentrated form, having a taste different from chocolate, without thereby departing from the scope of the present invention as described above and claimed below.

## Claims

1. Method for preparing a beverage obtained from a concentrated fluid product, comprising the steps of:
- providing coffee machine comprising a tank (33) containing a concentrated fluid product;
- drawing from the tank (33) a predetermined quantity of concentrated fluid product via a pump (36) that propels it into a connector unit (34);
- diluting the predetermined quantity of concentrated fluid product with a corresponding quantity of heated water so as to obtain a fluid pre-diluted product, wherein the fluid pre-diluted product is diluted with a degree of dilution less than an optimum dilution of the beverage when ready for consumption;
- conveying the quantity of pre-diluted product into a beverage preparation device (17); and
- completing dilution of the quantity of pre-diluted product by introducing into the beverage preparation device a predetermined quantity of milk via a line (26) connected to a source of liquid milk (25) along which a pump (27) is arranged until the optimum dilution is obtained for the beverage when ready for consumption.

2. Method according to Claim 1, **characterized in that** it includes the further steps of:
- conveying a quantity of steam, predetermined depending on the temperature to be reached in the quantity of beverage when ready for consumption, to the said beverage preparation device (17);
- transferring to said quantity of beverage the condensation heat of the quantity of steam, obtaining in this way heating of the quantity of beverage to the desired temperature.

3. Method according to Claims 1 or 2, **characterized in that** it also includes the step of supplying to the said beverage preparation device (17) a predetermined calibrated quantity of air, obtaining in this way frothing of the quantity of beverage prepared.

4. Method according to any one of Claims 1 to 3, **characterized in that** said concentrated fluid product for preparation of the beverage is chocolate-based.

## Patentansprüche

1. Verfahren zum Zubereiten eines Getränkes, das aus einem konzentrierten flüssigen Produkt erhalten wird, umfassend die Schritte:
- Bereitstellen einer Kaffeemaschine, die einen Vorratsbehälter (33) umfaßt, der ein konzentriertes flüssiges Produkt enthält,
- Entnehmen einer vorbestimmten Menge des konzentrierten flüssigen Produktes aus dem Vorratsbehälter (33) über eine Pumpe (36), die sie in eine Verbindungseinheit (34) fördert,
- Verdünnen der vorbestimmten Menge des konzentrierten flüssigen Produktes mit einer entsprechenden Menge erhitzten Wassers, um ein vorverdünntes flüssiges Produkt zu erhalten, wobei das vorverdünnte flüssige Produkt mit einem Verdünnungsgrad verdünnt ist, der kleiner als eine optimale Verdünnung des verzehrfertigen Getränkes ist,
- Fördern der Menge des vorverdünnten Produktes in eine Getränkezubereitungsvorrichtung (17) und
- Vervollständigen der Verdünnung der Menge des vorverdünnten Produktes mittels Einleiten einer vorbestimmten Menge Milch in die Getränkezubereitungsvorrichtung über eine Leitung (26), die mit einer Quelle flüssiger Milch (25) verbunden und entlang derer eine Pumpe (27) angeordnet ist, bis die optimale Verdünnung für das verzehrfertige Getränk erhalten wird.

2. Verfahren nach Anspruch 1, **dadurch gekennzeichnet, daß** es ferner die Schritte umfaßt:
- Fördern einer Dampfmenge, die in Abhängigkeit von der in der Menge des verzehrfertigen Getränkes zu erreichenden Temperatur vorbestimmt ist, zu der Getränkezubereitungsvorrichtung (17),
- Übertragen der Kondensationswärme der Dampfmenge auf die Getränkemenge, wodurch ein Erwärmen der Getränkemenge auf die gewünschte Temperatur erreicht wird.

3. Verfahren nach Anspruch 1 oder 2, **dadurch gekennzeichnet, daß** es auch den Schritt des Zuführens einer vorbestimmten kalibrierten Luftmenge zu der Getränkezubereitungsvorrichtung (17) umfaßt, wodurch ein Aufschäumen der zubereiteten Getränkemenge erreicht wird.

4. Verfahren nach einem der Ansprüche 1 bis 3, **dadurch gekennzeichnet, daß** das konzentrierte flüssige Produkt zur Zubereitung des Getränkes schokoladenbasiert ist.

## Revendications

1. Procédé de préparation d'une boisson obtenue à partir d'un produit liquide concentré, comprenant les étapes consistant à:
- fournir une cafetière comprenant un réservoir (33) qui contient un produit liquide concentré,
- prélever, dudit réservoir (33), une quantité prédéterminée du produit liquide concentré au moyen d'une pompe (36) qui transporte celle-ci dans une unité de connexion (34),
- diluer ladite quantité prédéterminée du produit liquide concentré avec une quantité correspondante d'eau chauffée de manière à obtenir un produit liquide pré-dilué, ledit produit liquide pré-dilué étant dilué avec un degré de dilution inférieur à une dilution optimale de la boisson prête à être consommée,
- transporter la quantité du produit pré-dilué dans un dispositif de préparation de boissons (17), et
- compléter la dilution de la quantité du produit pré-dilué en introduisant dans ledit dispositif de préparation de boissons une quantité prédéterminée de lait via une conduite (26) qui est reliée à une source de lait liquide (25) et le long de laquelle est disposée une pompe (27), jusqu'à ce que la dilution optimale soit atteinte pour la boisson prête à être consommée.

2. Procédé selon la revendication 1, **caractérisé par le fait qu'**il comprend les autres étapes consistant à:
- transporter, vers ledit dispositif de préparation de boissons (17), une quantité de vapeur qui est prédéterminée en fonction de la température à atteindre dans la quantité de boisson prête à être consommée,
- transférer, à ladite quantité de boisson, la chaleur de condensation de la quantité de vapeur, ce par quoi on obtient un chauffage de la quantité de boisson à la température souhaitée.

3. Procédé selon la revendication 1 ou 2, **caractérisé par le fait qu'**il comprend également l'étape consistant à amener une quantité d'air calibrée prédéterminée audit dispositif de préparation de boissons (17), ce par quoi on obtient un moussage de la quantité de boisson préparée.

4. Procédé selon l'une quelconque des revendications 1 à 3, **caractérisé par le fait que** ledit produit liquide concentré pour la préparation de la boisson est à base de chocolat.
